# EUROPEAN PATENT SPECIFICATION

(11) **EP 2 817 862 B1**
(45) Date of publication and mention of the grant of the patent: **15.03.2017**
(21) Application number: 13704261.0
(22) Date of filing: 16.01.2013
(51) Int. Cl.: H02J 3/26

(54) **SYSTEMS, METHODS AND DEVICES FOR DETECTING BRANCH CIRCUIT LOAD IMBALANCE**
SYSTEM, VERFAHREN UND VORRICHTUNG ZUR BESTIMMUNG EINES LASTUNGLEICHGEWICHTS IN EINEM ABZWEIG
SYSTÈMES, PROCÉDÉS ET DISPOSITIFS POUR LA DÉTECTION D'UN DÉSÉQUILIBRE DE CHARGE DANS UNE BRANCHE ÉLECTRIQUE

(30) Priority: 22.02.2012 US 201213402667
(43) Date of publication of application: 31.12.2014
(73) Proprietor: Schneider Electric USA, Inc., Palatine, Illinois 60067 (US)
(72) Inventor: STANLAKE, Matthew, Victoria, British Columbia V8Z 2H7 (CA)
(74) Representative: Zerbi, Guido Maria
(86) International application number: PCT/US2013/021699
(87) International publication number: WO 2013/126159

(56) References cited:
- GB-A- 2 168 211

## Description

### TECHNICAL FIELD

The present disclosure relates generally to multi-phase electrical distribution systems, and more particularly to multi-phase branch circuit load imbalance detection systems.

### BACKGROUND

Conventional utility networks supply utilities for commercial, residential and industrial purposes. In a typical electrical distribution system, for example, electrical energy is generated by an electrical supplier or utility company and distributed to consumers via a power distribution network. The power distribution network is often a network of electrical distribution wires (more commonly known as "electrical transmission lines") which link the electrical supplier to its consumers. Additional devices, such as bus bars, switches (e.g., breakers or disconnectors), power transformers, and instrument transformers, which are typically arranged in switch yards and/or bays, are automated for controlling, protecting, measuring, and monitoring of substations.

Typically, electricity from a utility is fed from a primary station over a distribution cable to several local substations. At the local substations, the supply is transformed by distribution transformers from a relatively high voltage on the distributor cable to a lower voltage at which it is supplied to the end consumer. From the local substations, the power is provided to industrial users over a distributed power network that supplies power to various loads. Such loads may include, for example, various power machines, lighting, HVAC systems, etc.

Presently, three-phase electric power polyphase systems are the most common means of alternating-current power transmission and distribution used worldwide. In a three-phase system, three circuit conductors carry three alternating currents, which have the same frequency but reach their instantaneous peak values at different times. Using one of the circuit conductors as a point of reference, the other two currents are delayed in time by one-third and two-thirds of one cycle of the electric current. This delay between phases provides constant power transfer over each cycle of the current, and also makes it possible to produce a rotating magnetic field for electric motors. The most commonly recognized advantage of three-phase power transmission over its single-phase and two-phase counterparts is that the three-phase system can transmit more power using less conductive material.

In a typical three-phase distribution environment, each phase supplies one or more branch circuits. In a commercial facility, for example, one branch circuit might supply machinery, while another circuit might supply lighting, another HVAC, and so on. A problem that frequently occurs in three-phase distribution networks is how to evenly distribute electrical power from the three incoming phases to each of the branch circuits. Often, over time, the load topology of a facility will change, sometimes drastically. Some branch circuits will become more heavily loaded, while others less heavily loaded, due to, for example, changing or movement of machinery on a factory floor, or the addition of high wattage accessories, such as refrigerators, electric stoves, home entertainment components, etc., in a residential setting. Thus, the load on each of the three incoming phases will also change with the changing load on the branch circuits such that a three phase network that was evenly balanced at first may become unbalanced over time.

In a rapidly expanding data center, maintaining load balance between all three phases is a challenge. From the individual 3-phase circuits, to the branch panel, imbalanced loads can cause problems. At the lowest level, an individual 3-phase wye-connected circuit may feed three separate 120V loads. In one undesirable scenario, the effective capacity of the circuit could be cut by 2/3 (30A on phase A, 0A on phase B and phase C), leaving excess, unusable supply capacity. In a data center short on circuits, this sort of imbalance could cause unnecessary trips and prevent the expansion of the data center. At the branch panel level, this issue is magnified. In a perfectly balanced panel, each phase would carry a third of the load. However, as racks, servers and IT equipment, for example, are brought online or removed, it is easy to accidently overload one or two of the phases. In addition, local operating laws may require that loads be evenly proportioned among branch circuits; data center operators run the risk of fines or other sanctions for breaking this code.

In most data centers, power is one of the limiting factors preventing the expansion of the facility. Ensuring each multi-phase circuit's load is balanced across the phases increases the effective system capacity and reduces undesirable nuisance breaker trips. While phase load imbalance detection algorithms are already available for power meters, there is not a dedicated meter for each multi-phase circuit in the final distribution panel. As such, an imbalance in the circuit might not be visible to the upstream meters.

### SUMMARY

Systems are disclosed herein that will alert data center operators of load imbalances through-out a three-phase electrical power distribution system. In some embodiments, the user configures an acceptable imbalance level and the system monitors individual multi-pole circuits, panels and power distribution units (PDU) for an imbalance. When the threshold is breached, an alert is generated and, in some configurations, a work order is created, which can allow a technician or operator to analyze the system and make necessary changes to bring the system back into alignment. In some configurations, the system takes per-pole amperage readings from the panels and amperage readings on the mains of each panel.

Unlike traditional monitoring systems, where load imbalance is detected upstream from the distribution panel, some of the disclosed systems do not employ a single meter for each multi-phase circuit; rather, branch circuit monitors are utilized to monitor each space in a panel. The downstream load is very dynamic and often requires algorithmic logic to determine if a load imbalance actually exists. To ensure proper load balance, some of the disclosed concepts include mapping of circuit panel spaces to phases, and statistical analysis of multiple circuit measurements over time. Ensuring proper load balance between phases of a circuit reduces the risk of a breaker tripping and increases available power capacity.

According to aspects of the present disclosure, a method is presented for detecting a load imbalance in a multi-phase electrical distribution system with a plurality of circuits and a panel having multiple spaces. The method includes: determining an association between each of the spaces of the panel and a respective one of the circuits; receiving data of an electrical parameter of a system powered by the multi/phase electrical distribution system, indicative of load imbalance; receiving data of a system parameter indicative of load activity of a system powered by the multi-phase electrical distribution system, wherein the electrical parameter includes per-phase current or per-phase power, or a combination thereof, and wherein the system parameter includes CPU operations or disk activity, or a combination thereof; determining an average value from the electrical parameter data; determining an aggregate value from the system parameter data; determining a model correlating the system parameter with the electrical parameter based, at least in part, on the associations between the spaces of the panel and the circuits, the electrical parameter data, and the system parameter data; determining if the average value of the electrical parameter is unbalanced; if the average value of the electrical parameter is unbalanced, determining a modeled electrical parameter value using the model and the aggregate value of the system parameter; determining if the average value of the electrical parameter corresponds with the modeled electrical parameter value; and if the average value of the electrical parameter does not correspond with the modeled electrical parameter, outputting an indication that the load imbalance exists.

Other aspects of the present disclosure are directed to a computer program product comprising one or more non-transient computer-readable media having an instruction set borne thereby. The instruction set is configured to cause, upon execution by one or more controllers, a load imbalance detection system to complete the acts of: determining an association between each space of an electrical panel and a respective one of a plurality of circuits in a multi-phase electrical distribution system; receiving data of an electrical parameter indicative of load imbalance; receiving data of a system parameter indicative of load activity; determining an average value from the electrical parameter data; determining an aggregate value from the system parameter data; determining a model correlating the system parameter with the electrical parameter based, at least in part, on the electrical parameter data and the system parameter data; determining if the average value of the electrical parameter is unbalanced; if the average value of the electrical parameter is unbalanced, determining a modeled electrical parameter value using the model and the aggregate value of the system parameter; determining if the average value of the electrical parameter corresponds with the modeled electrical parameter value; and if the average value of the electrical parameter does not correspond with the modeled electrical parameter, outputting an indication that the load imbalance exists.

In accordance with other aspects of the present disclosure, a computer-implemented method is featured for detecting branch circuit load imbalance in a multi-phase electrical distribution system of a data center with multiple racks. The electrical distribution system includes a plurality of multi-phase circuits electrically connected to an electrical distribution panel having multiple spaces. The method includes: generating a map of the system, the map including connections between each of the spaces of the panel and a respective one of the multi-phase circuits, and connections between each of the multi-phase circuits and a respective one of the racks in the data center; collecting a baseline of historical data of the electrical distribution system; monitoring for each of the spaces a respective electrical parameter indicative of load imbalances at the branch circuit level downstream of the electrical distribution panel, the electrical parameter including per-phase current or per-phase power, or both of the multi-phase electrical distribution system; monitoring a respective system parameter indicative of load activity on each of the multi-phase circuits, the system parameter including CPU operations or disk activity, or both, wherein the system parameter is a parameter of a system powered by the multi-phase electrical distribution system; calculating, for each of the spaces, a respective rolling daily average value of the monitored electrical parameter; calculating, for each of the multi-phase circuits, a respective rolling daily aggregate value of the monitored system parameter; creating a linear regression model correlating the system parameter with the electrical parameter over a predetermined period of time, the linear regression model being created, at least in part, from the map of the system, a smoothed representation of the monitored electrical parameter, a smoothed representation of the monitored system parameter, and the baseline of historical data; determining if the rolling daily average value for each of the spaces is unbalanced; if at least one of rolling daily average values is unbalanced, calculating a modeled electrical parameter value using the linear regression model and the rolling daily aggregate values of the monitored system parameter; determining if the unbalanced one of rolling daily average values corresponds with the modeled electrical parameter value; and if the unbalanced one of rolling daily average values does not correspond with the modeled electrical parameter value, generating an alarm indicating that the load imbalance exists.

According to even yet another aspect of the present disclosure, one or more non-transient computer readable storage media are encoded with instructions for directing a multi-phase branch circuit load imbalance detection system to perform any of the methods disclosed herein.

The above summary is not intended to represent each embodiment or every aspect of the present disclosure. Rather, the foregoing summary merely provides an exemplification of some of the novel features included herein. The above features and advantages, and other features and advantages of the present disclosure, will be readily apparent from the following detailed description of the embodiments and best modes for carrying out the present invention when taken in connection with the accompanying drawings and appended claims.

### BRIEF DESCRIPTION OF THE DRAWINGS

FIG. 1 is a partially diagrammatic perspective view illustration of an exemplary data center rack power configuration in accordance with aspects of the present disclosure.
FIG. 2 is a schematic illustration of two representative rack power bar plug phase configurations in accordance with aspects of the present disclosure.
FIG. 3 is an electrical diagram of a representative multi-phase power distribution system showing an improper phase loading configuration in accordance with aspects of the present disclosure.
FIG. 4 is an electrical diagram of another representative multi-phase power distribution system showing improper phase loading configuration in accordance with aspects of the present disclosure.
FIG. 5 is a flowchart illustrating a high-level overview of a method of detecting a load imbalance in a multi-phase branch circuit in accordance with aspects of the present disclosure.
FIG. 6 is a flowchart illustrating a CPU-operations collection workflow in accordance with aspects of the present disclosure.
FIG. 7 is an electrical diagram of another representative multi-phase power distribution system illustrating a CPU load calculation in accordance with aspects of the present disclosure.
FIG. 8 is a flowchart illustrating an analysis block in accordance with aspects of the present disclosure.
FIG. 9 is a flowchart illustrating a notify block in accordance with aspects of the present disclosure.
FIG. 10 is a graph which illustrates a linear regression model of CPU operations versus phase amperage in accordance with aspects of the present disclosure.
FIG. 11 is a table with a representative daily average phase for each phase in a three-phase circuit in accordance with aspects of the present disclosure.
FIG. 12 is a table of another representative daily average phase for each phase in a three-phase circuit in accordance with aspects of the present disclosure.

While the present disclosure is susceptible to various modifications and alternative forms, specific embodiments have been shown by way of example in the drawings and will be described in detail herein. It should be understood, however, that the disclosure is not intended to be limited to the particular forms disclosed. Rather, the disclosure is to cover all modifications, equivalents, and alternatives falling within the spirit and scope of the invention as defined by the appended claims.

### DETAILED DESCRIPTION

While this invention is susceptible of embodiment in many different forms, there are shown in the drawings and will herein be described in detail preferred embodiments of the invention with the understanding that the present disclosure is to be considered as an exemplification of the principles of the invention and is not intended to limit the broad aspect of the invention to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference or otherwise. For purposes of the present detailed description, unless specifically disclaimed: the singular includes the plural and vice versa; the words "and" and "or" shall be both conjunctive and disjunctive; the word "all" means "any and all"; the word "any" means "any and all"; and the word "including" means "including without limitation." Moreover, words of approximation, such as "about," "almost," "substantially," "approximately," and the like, can be used herein in the sense of "at, near, or nearly at," or "within 3-5% of," or "within acceptable manufacturing tolerances," or any logical combination thereof, for example.

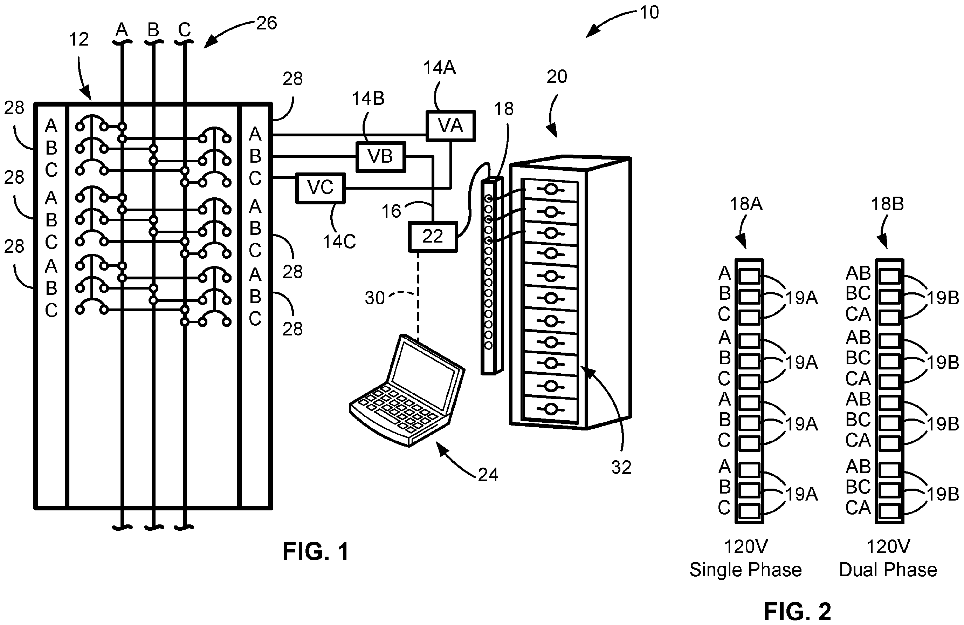

Referring now to the drawings, wherein like reference numerals refer to like components throughout the several views, FIG. 1 illustrates an exemplary data center rack power configuration, collectively designated as 10, in accordance with aspects of the present disclosure. For illustrative and descriptive purposes, the data center 10, which is a facility used to house computer systems and associated components, is represented herein by an electrical distribution panel 12, VA, VB and VC panel poles (or "spaces") 14A, 14B and 14C, respectively, a 3-phase circuit 16, a power bar 18, a rack 20, and a monitoring system, which is represented by a monitoring device 22 and a computer 24. Only selected components of the data center 10 have been shown and will be described in additional detail hereinbelow. Nevertheless, the data center configurations discussed herein can include numerous additional and alternative components, such as control modules, redundant and backup power supplies, busses, storage devices, fuse assemblies, safety switches, sensor assemblies, computing devices, and other well-known peripheral components, for example. Seeing as these components are well known in the art, they will not be described in further detail herein. In a similar regard, many of the disclosed concepts are suitable for use in other distributed computing environments and other electrical distribution applications requiring the detection of branch circuit load imbalances; as such, the disclosed concepts are not per se limited to a data center application. Additional information regarding data centers, co-location centers, distributed computer systems, and related electrical distribution networks can be found, for example, in commonly owned International Patent Application No. PCT/US2011/065554, which was filed on December 16, 2011, and is incorporated herein by reference in its entirety for all purposes.

A three-phase feed, designated generally as 26 in FIG. 1, distributes electricity from a power distribution unit (PDU) to the electrical distribution panel 12. The electrical distribution panel 12 may take on various forms, some in the nature of a panelboard or load center, functioning to house one or more electrical components of an electrical distribution system. In the embodiment illustrated in FIG. 1, for example, the electrical distribution panel 12 is a 42-pole, 3-phase final distribution panelboard that houses, among other things, a number of circuit breakers 28, each of which may be represented by a 50 Amp, 3-pole, 3-phase, 208 Volt circuit breaker, all of which are available from Schneider Electric (Square D Co.) of Palatine, IL, USA.

Power is provided through the panel poles 14A, 14B, 14C to each rack via a 3-phase circuit 16. A rack 20, in a data center context, is typically an enclosure or support frame that holds, for example, IT hardware, such as servers, storage arrays, telecom equipment, etc. By way of non-limiting example, the rack 20 may be any of the Actassi® VDS series IP 20 server cabinets or the Casys® VDS series server racks, which are available from Schneider Electric. The three-phase circuit 16 connects to a rack power bar 18 that provides 120V or 208V connections (or both) to the servers 32 housed by the rack 20. In a 120V, single-phase configuration, each plug 19A in the rack power bar 18A provides power from a different phase (i.e., A-phase, B-phase, or C-phase), as seen in FIG. 2. For a 208V, dual-phase configuration, in contrast, the plugs 19B in the rack power bar 18B typically alternate between two phases, i.e., AB, BC, CA. Since each phase of the three-phase circuit can be accessed independently, ensuring proper balancing across phases can be a challenge.

The monitoring system, as indicated above, is represented herein by, but is certainly not limited to, one or more monitoring devices 22 and one or more computers 24, which are shown communicating over a communications network 30. Communications network 30 may be a wired or a wireless network, or a combination of wired and wireless technology, using any of a variety of methods, protocols and standards, including, among others, token ring, Ethernet, wireless Ethernet, Bluetooth, TCP/IP, UDP, HTTP, FTP, SNMP, SMS, MMS, SS7, JSON, SOAP, and CORBA. In some embodiments, the monitoring device 16 is a power meter, such as a Square D® PowerLogic® BCM series (e.g., PowerLogic BCM42 or PowerLogic BCMSC) branch current monitor, which may be configured to report the current level at each of the breakers 28 of the panelboard 12, and deliver circuit loading information using, for example, Modbus® protocol over an RS-485 communications network to system software, such as PowerLogic ION Enterprise®, PowerLogic System Manager™ or other compatible system.

In other embodiments, the monitoring device 22 may include one or more intelligent electronic devices (hereinafter "IED"). As used herein, an IED refers to any system element or apparatus with the ability to sample, collect, and/or measure one or more operational characteristics and/or parameters of an energy system. In the electrical utility context, the IEDs may be based on a PowerLogic® CM4000T Circuit Monitor, a PowerLogic® Series 3000/4000 Circuit Monitor, and/or a PowerLogic® ION7550/7650 Power and Energy Meter, for example, all of which are available from Schneider Electric, or any other suitable monitoring device (e.g., circuit monitor), relay, metering device, or power meter, or the like. The IED may be a microprocessor-based controller that is operable to receive data from sensors (e.g., optical sensors, thermal sensors, acoustic sensors, capacitive sensors, etc.), monitoring devices, power equipment, and/or other sources of information, and, in some embodiments, is also operable to issue control commands.

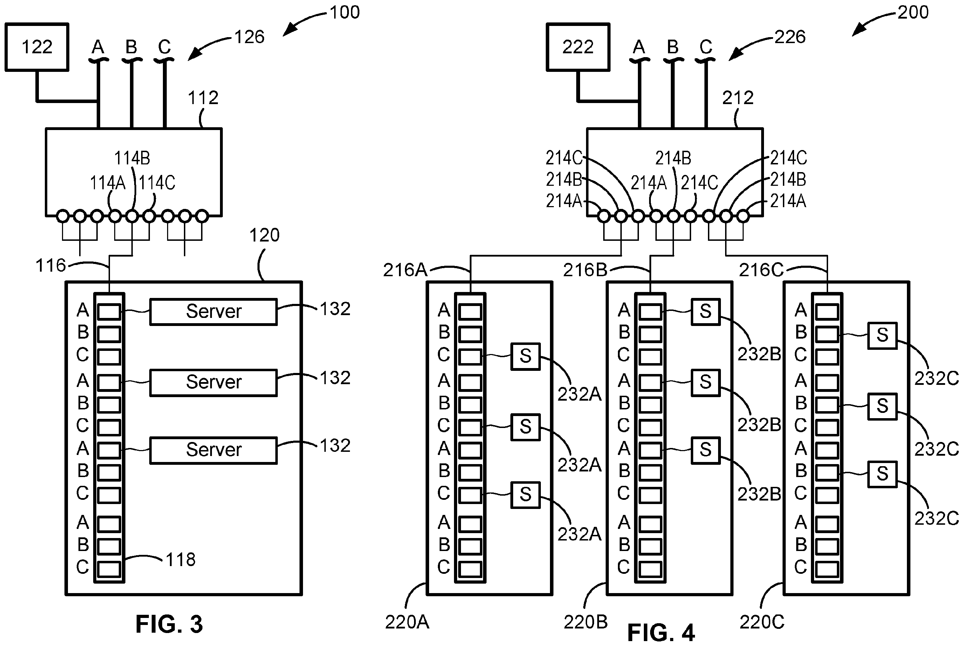

Oftentimes, personnel at a data center will add servers to a rack or otherwise modify the power draw from a power bar without a genuine understanding of how the 3-phase power distribution system operates and, thus, assume any one plug in the power bar is the same as another. For this reason, a circuit may become improperly loaded, such as the manner illustrated in FIG. 3, stranding capacity from the other phases. FIG. 3 is an electrical diagram of a representative multi-phase power distribution system 100 showing an improper phase-loading configuration. Similar to the arrangement of FIG. 1, the power distribution system 100 of FIG. 3 includes an electrical distribution panel 112 with three poles 114A, 114B and 114C that are connected to the power bar 118 of a rack 120 through a 3-phase circuit 116. In the case of FIG. 3, however, the power bar 118 is a 120V, single-phase configuration with three servers 132 all connected to one phase - e.g., the A-phase in the illustrated embodiment. A 3-phase circuit breaker will trip when the current on this phase reaches a predetermined trip point; in a worst case scenario, one phase (i.e., the A-phase) is completed loaded (50Amp draw), but the other two phases have no load (0Amp draw). If all other circuits in the panel 112 are reasonably balanced, then a meter 122 on the main feeds 126 to the panel 112 would be able detect this imbalance.

By way of comparison, FIG. 4 is an electrical diagram of another representative multi-phase power distribution system 200 showing a different improper phase-loading configuration. The power distribution system 200 of FIG. 4 includes three racks 220A, 220B and 220C, each of which is connected by a respective 3-phase circuit 216A, 216B and 216C and poles 214A, 214B and 214C to an electrical distribution panel 212. As in FIG. 4, multiple racks have been misconfigured - in the first rack 220A, all three servers 232A are connected to the C-phase of the first power bar 218A; in the second rack 220B, all three servers 232B are connected to the A-phase of the second power bar 218B; and, all three servers 232C of the third rack 220C are connected to the B-phase of the third power bar 218C. The per-phase load at the main meter 222 of the panel 212 may erroneously appear to be balanced. In this case, operations will appear normal, but two thirds of the available capacity has been stranded. Enhancing the complexity of this scenario, the load on each circuit 216A-C fluctuates depending, for example, on the demands placed on the circuit 216A-C by their respective racks 220A-C and servers 232A-C.

In light of the foregoing, an algorithmic process is disclosed to detect if a circuit load imbalance is temporary, e.g., caused by a brief change in one of the servers, or permanent, e.g., a structural issue that data center staff need to address. In accord with the disclosed concepts, the system creates a model correlating load activity (e.g., CPU usage of the servers within each rack) to electrical consumption (e.g., per-phase power or per-phase amperage). The system can then "learn" the typical behavior of each rack within the system and compare the actual phase readings against the modeled (or "expected") values. Combining this model, as well as long term average energy values, allows data center administrators to accurately balance loads across all three phases in their data centers. Generally speaking, the system combines each space in a final distribution panel into multi-phase circuits, monitors each space's and circuit's load profile, analyzes the load profile with a statistical analysis process to ensure each circuit's load balance is optimal, and generates a proper notification if an issue is detected.

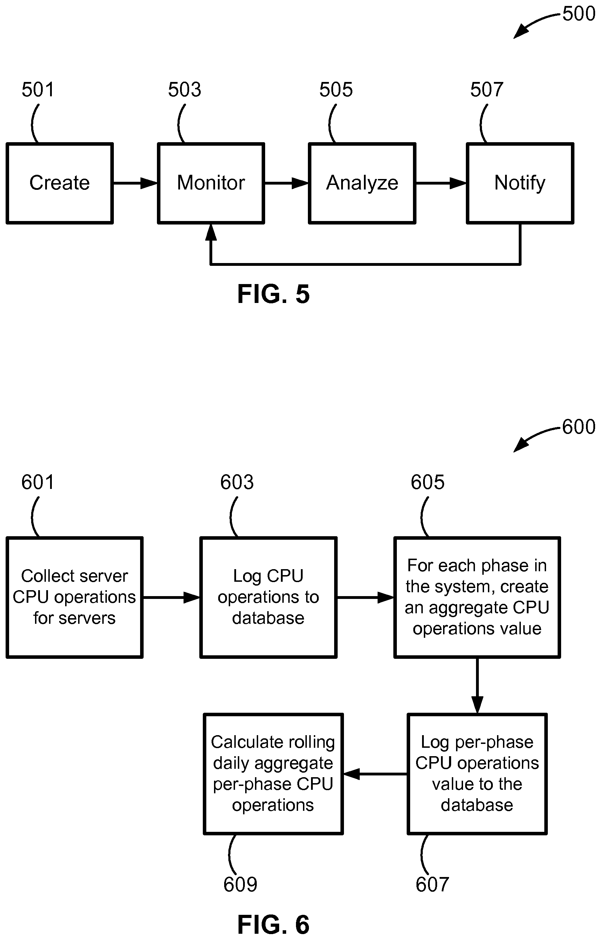

FIG. 5 is a high-level overview of a method 500 for detecting a load imbalance in a multi-phase electrical distribution system, e.g., at the branch circuit level. As illustrated, the method comprises four general steps: create, at block 501; monitor, at block 503; analyze, at block 505; and notify, at block 507; each of these steps will be developed in further detail below. FIG. 5 can represent an algorithm that corresponds to at least some instructions that may be executed by one or more controllers to perform any or all of the described functions associated with the disclosed concepts. The instructions corresponding to the algorithm 500 can be stored on a non-transitory computer-readable medium, such as on a hard drive or other mass storage device or a memory device. In some embodiments, the method 500 includes at least those steps enumerated above. It is also within the scope and spirit of the present disclosure to omit steps, include additional steps, and/or modify the order presented. Lastly, the method 500 of FIG. 5 will be described at times with respect to components and arrangements illustrated in FIGS. 1-4; nevertheless, the disclosed concepts are not so limited.

Prior to carrying out the method 500, or as part of the create block 501, one or more branch circuit monitors, such as the monitoring device 22 discussed above with respect to FIG. 1, are installed in the electrical distribution system downstream from the distribution panel 12. This branch circuit monitor 22, in some embodiments, is configured to measure the amperage or power (or both) for each space 14A-C in the panel 12.

The method 500 includes, e.g., at block 501, determining an association between each of the spaces 14A-C of the panel 12 and a respective one of the various multi-phase circuits 16 of the electrical distribution system. Block 501 also includes, in at least some embodiments, determining an association between each of the multi-phase circuits 16 and a respective one of the loads on the panel 12 (e.g., rack 20). By way of background, a typical final distribution panel has space for 42 single-phase circuits, 20 two-phase circuits, or 14 three-phase circuits, for example. In general, there are no restrictions or rules on how these circuits are allocated in the panel; it may therefore be necessary to logically connect spaces in the panel to circuits. It may also be necessary to then map each of the circuits to the particular rack they power. In many modern data centers, a 3-phase circuit will feed a single rack in the data center. Each phase in the 3-phase circuit is associated with the servers it powers. For example, 3-phase circuit XYZ feeds rack FL1.ROW1.RACK19, where phase A on circuit XYZ powers Servers 1 and 4 in the rack, Phase B powers servers 2 and 5, and Phase C powers servers 3 and 6. For this reason, a map of the system may be generated, which includes indicators of the connections between each of the spaces 14A-C of the panel 12 and a respective multi-phase circuit 16, and indicators of the connections between each of the multi-phase circuits 16 and a respective one of the racks 12 in the data center 10.

The relative priority of the load(s) attached to each circuit can also defined during execution of block 501. Each space 14A-C operates as an electrical connection to a single phase from the upstream three-phase feed 26. In the illustrated embodiment, the spaces 14A-C are combined when a three-phase circuit breaker 28 is installed in the panel 12. In most data center environments, not all servers or racks are of equal significance - some racks/servers are more critical than others. The system can therefore be configured to allow manual configuration of the relative priority of these load(s) - i.e., users can specify the priority level of an alarm so, if an imbalance is identified on the circuit, the system will send an alarm through the notification system with a higher priority level. It is also possible, in some implementations, to automate this hierarchy of priority levels, e.g., based on the level of activity to the rack, or even its floor placement. Block 501 may therefore further comprise determining a relative priority of the loads connected to the circuits, such that an indication that a load imbalance exists can include a "high-priority" alarm for circuits having a load connected thereto with a high priority.

According to aspects of the present disclosure, the system measures, monitors, or otherwise receives data of an electrical parameter indicative of unbalance and data of a system parameter indicative of load activity. Although this disclosure intimates using per-phase current measurements as the electrical parameter and CPU operations as the system parameter, it is possible to employ other parameters, such as per-phase power as the electrical parameter and disk activity as the system parameter, as two other non-limiting examples. CPU activity is typically measured in MIPS or Million instructions per second; HD activity is typically measured in data through-put. For an electrical utility, the monitoring system may be configured to monitor other electrical characteristics such as, for example, voltage, current distortion, and/or voltage distortion as the electrical parameter. In a telecommunications ("telecom") environment, the system could also consider network activity as the system parameter. In so doing, the system can monitor each space's amperage to help ensure it is in balance with the other phases that make up the circuit. This step can be performed once at the time of the initial system setup and then again any time the circuit configuration in the panel changes. In this vein, the create block 501 and/or the monitoring block 503 may include monitoring for each of the spaces 14A-C a respective electrical parameter indicative of load imbalances at the branch circuit level downstream of the electrical distribution panel, and monitoring a respective system parameter indicative of load activity on each of the multi-phase circuits.

With the mapping complete, it is possible to create a "learning" model correlating the system parameter with the electrical parameter. In some embodiments, the model created in block 501 is based, at least in part, on the previously determined associations between the spaces of the panel and the multi-phase circuits, as well as the previously collected electrical parameter data and the system parameter data. By way of non-limiting example, to create the model, the system collects a baseline of historical data. To do so, the system will run the monitoring portion of the system, e.g., for approximately several weeks to collect data about the system's electrical usage and operating behavior. Alternatively, the baseline of historical data can be preprogrammed and/or, if the data is available from another similarly configured system, the raw data could optionally be imported to create the baseline for the learning model.

In the representative application, the circuit data and the CPU operations data will be used to create a linear regression model correlating the system parameter (e.g., the number of CPU operations) during a predetermined period of time with the electrical parameter (e.g., expected per-phase circuit amperage). If a simple linear model for a single independent variable has the form y = mx + b, for example, a linear model with multiple independent variables would have the form y = m1x + m2z + ... + b. The model can take measured and/or observable qualities of a physical system and predict the numerical characterization of some other quality of the system that is causally influenced by the observed qualities. Continuing with the above example, y is phase amperage and x is CPU operations. The acquisition of a reference data set and creation of the model may be accomplished by the same party, or the reference dataset may be acquired by one party and passed to another party responsible for creating the model. Additional information regarding linear regression modeling can be found, for example, in commonly owned U.S. Patent Application No. 12/561,024, which was filed on September 16, 2009 (corresponding to Patent Appl. Publ. No. US 2011/0066299 A1), and commonly owned U.S. Patent Application No. 13/323,944, which was filed on December 13, 2011, both of which are incorporated herein by reference in their respective entireties.

In some embodiments, the data may be "smoothed" in block 501 before creating the learning model. Smoothed data is a representative summary of a group of sequential values. Direct measurement values of electrical and system parameters tend to be "noisy" - varying rapidly when measured on a second-by-second basis, making it difficult to discern overall trends that may indicate circuit unbalance. To reduce this noise, a group of sequential measurement values (e.g., values measured every ten seconds and grouped together over a 1-hour period) are "smoothed" by applying a known mathematical operation that generates a summary value representative of the values over that 1-hour period. In particular, the mathematical operation applied should act to remove the noise and highlight a potential unbalance between phases in a three-phase circuit. A simple average of all 10-second values over the 1-hour period would be one example of generating a smoothing operation. Other examples include a rolling daily average with a 24-hour window that generates a new summary value every hour. Other examples include simple moving averages, exponential moving averages, etc. As such, the linear regression model which correlates the system parameter with the electrical parameter over a predetermined period of time may be based, at least in part, on a smoothed representation of the monitored electrical parameter and a smoothed representation of the monitored system parameter (e.g., the baseline of historical data), as well as the map of the system.

The number of CPU operations is a summation of the total operations from each server whereas power is taken as an average value. Consequently, when the model is used to calculate an average daily value, it may be necessary to divide the total number of CPU operations by the number of periods to establish the daily average number of CPU operations per period prior to inputting CPU operations data into the model. In some embodiments, block 501 includes creating a separate linear regression model for each phase of each three-phase circuit in the system to accurately anticipate the performance of the system.

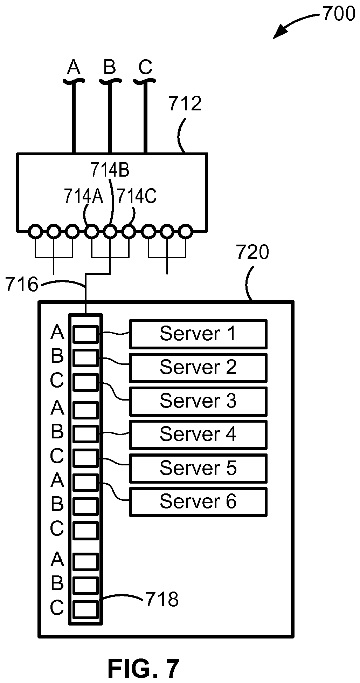

With continuing reference to FIG. 5, the monitor block 503 retrieves information about each space 14A-C in the panel 12, and passes this data to the analysis block 505. Generally speaking, the monitoring block 503 tracks each space's amperage. The polling frequency can be increased to ensure optimal accuracy. In some embodiments, the main meter on the panel 12 will measure other electrical components, but at each space 14A-C only the amperage is measured. In addition to the power data from the panel 12, the system collects information about the loads on each circuit so it can create the aforementioned learning model. In a non-limiting example, the system uses the aggregate number of CPU operations performed on each phase to represent the work done. For example, FIG. 7 is an electrical diagram of a representative multi-phase power distribution system 700 with an electrical distribution panel 712 with three poles 714A, 714B and 714C that are connected to the power bar 718 of a rack 720 through a 3-phase circuit 716. In FIG. 7, the CPU operations for Server 1 and Server 6 would be aggregated together to come up with the total CPU processing on phase A, while the CPU operations for Server 2 and Server 4 would be aggregated together to come up with the total CPU processing on phase B, and the CPU operations for Server 3 and Server 5 would be aggregated together to come up with the total CPU processing on phase C.

FIG. 6 is a flowchart illustrating a CPU-operations collection workflow 600. FIG. 6 shows the flow of how the monitor block 503 could collect and store the CPU operations values. At block 601, server CPU operations are collected for each server. This information could be collected from IT asset management systems, like IBM Tivoli®, or directly from the servers themselves. Most new servers simplify the direct extraction of management information using SNMP protocol. At block 603, the CPU operations are logged, e.g., in a database, and passed to block 605 where an aggregate CPU operations value is determined for each phase in the system. Once calculated, the per-phase aggregate CPU operations values are logged at block 607, e.g., in the database, and a rolling daily aggregate per-phase CPU operations value is calculated at block 609. By way of explanation, and not limitation, each server in a rack will be connected to a plug in a corresponding power strip that is fed by a single phase. The rolling daily aggregate CPU operations value in this example is the summation of the MIPS/MB transferred (or other metric of IT activity) for all of the servers connected to each phase that has occurred during the aggregation period. The rolling daily aggregate CPU operations value is intended to create a single representation of IT load that can then correlate to the power demand during that time period. Note, the rolling daily aggregate should be considered a demonstrative example of the smoothed representation described above; as such, other examples of a smoothed representation, such as those previously listed, could be employed.

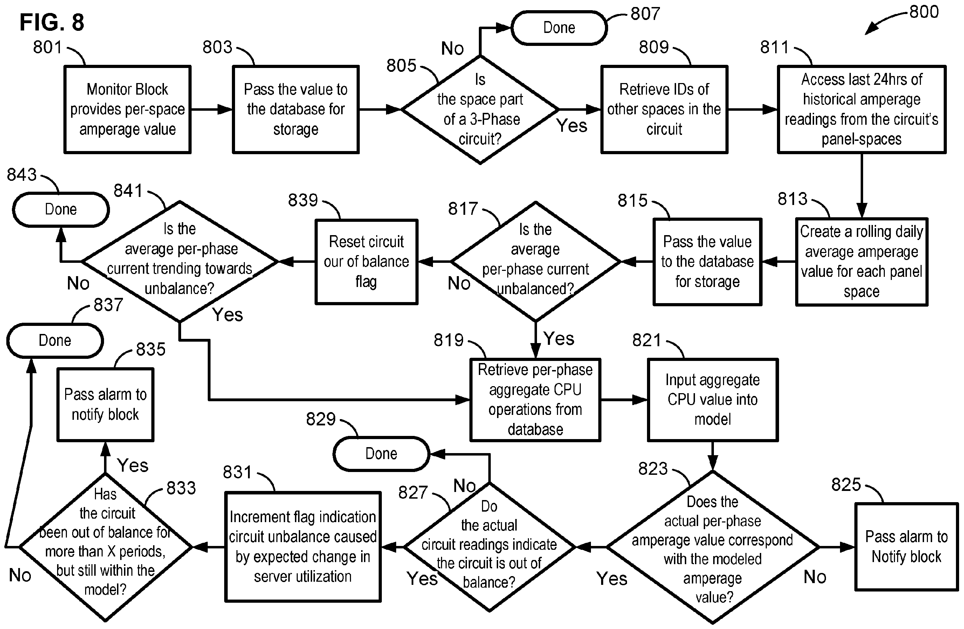

Turning next to FIG. 8, a flowchart is provided illustrating a representative analysis block, designated generally at 800, which highlights some of the principal points of functionality of the system. Generally speaking, the method 800 performs two analyses: one based (exclusively, in some adaptations) on the power readings, and another that factors in the CPU utilization of the servers on each phase. The flowchart begins at block 801 when an amperage value, e.g., for a single space, is received from the monitor block (e.g., block 503 in FIG. 5). At block 803, the value is logged, e.g., to a database for long term storage, before any subsequent analysis. Next, the method 800 determines at block 805 if the panel space associated with the amperage value received at block 801 is part of a 3-phase circuit. If it is not (i.e., block 805=No), the method 800 terminates and awaits the next panel-space amperage value. If the space is part of a three-phase circuit (i.e., block 805=Yes), the method 800 continues to block 809 and gathers or otherwise determines the identity of the other spaces in the 3-phase circuit. Block 811 then retrieves or otherwise determines electrical parameter values (e.g., the amperage data from the last 24 hours) for each space in the 3-phase circuit from the database.

Once retrieved, the historical amperage values from block 811 are used to determine one or more average values from the electrical parameter data. For instance, as indicated at block 813, a rolling daily average amperage value is calculated for each panel space. In some embodiments, the method 800 of FIG. 8 calculates an average amperage value for the 3-phase circuit, e.g., over the last 5 minutes, 1 hour, 6 hours, 12 hours and 24 hours. Recognizably, greater, fewer, and/or alternative time periods can be employed without departing from the intended scope and spirit of the present disclosure. In this example, the rolling average is the summation of the recorded amperage values divided by the number of periods. The rolling average calculation helps to smooth out some of the short-term volatility in the data set so the analysis can focus on longer term trends. These average values can then be passed back to the database for storage so a user, if so desired, can perform additional analysis in the future, as indicated at block 815.

After the average amperage values are determined for each phase in the 3-phase circuit, e.g., over the previous 24 hours, block 817 assesses these values to see whether or not the circuit is out of balance. In the illustrated embodiment, a comparison is performed of coincident, smoothed electrical parameters for the 3-phase circuit. For example, if spaces 1, 2, 3 are phases A, B, C of a 3-phase circuit, smoothed values for spaces 1, 2, 3 for the same period of time (e.g., the same 24-hour period) are compared, and the circuit can be considered unbalanced if the smoothed value for any of the three spaces exceeds the average of all three values by a predetermined threshold value. In some embodiments, the method determines if each of the rolling daily average values for each of the spaces is unbalanced.

If it is determined at block 817 that the average per-phase current is unbalanced (i.e., block 817=YES), the method 800 responsively determines an aggregate value from the system parameter data. In the illustrated embodiment, for example, the method 800 proceeds to block 819 and retrieves the aggregate number of CPU operations for each phase of the circuit. At block 821, these values are entered into the linear regression model, e.g., that was developed during the create block 501 of FIG. 5, to determine a modeled electrical parameter value. As one non-limiting example, the output of the model is an estimated (or "expected") amperage value based on the number of CPU operations performed during the period. Put another way, when the number of CPU operations is entered into the model, the model generates an estimated energy consumption that would be expected when that number of operations occurs. Thereafter, the method 800 then determines, at block 823, if the average value of the electrical parameter (e.g., the unbalanced rolling daily average) corresponds with the modeled electrical parameter value (e.g., the estimated amperage value), e.g., to detect potential anomalies.

If the average value of the electrical parameter does not correspond with the modeled electrical parameter, the method responsively outputs an indication that a load imbalance exists. In FIG. 8, for example, responsive to the actual value deviating from the model by an order of magnitude (e.g., a user-configurable and/or user-selectable system threshold value), an alarm notification is immediately sent to the notify block 825. The actual value deviating markedly from the model is an indication, for example, that a major change has occurred to the servers in the corresponding rack. One such change could be that another server was added to the rack, but the system map was not properly updated to reflect this change. Another example is that a component within one of the servers could be failing. Irrespective of the actual cause, it is oftentimes very important that staff investigate the detected departure from the expected performance. This is true whether the circuit itself is currently unbalanced, or is trending towards an unbalanced situation.

If the modeled and actual values correspond (block 823=Yes) and the actual circuit readings indicate the circuit is not currently out of balance (block 827=No), the method 800 proceeds to block 829 and exits the analysis workflow 800. In contrast, if the actual amperage values correspond to the expected, modeled value (block 823=Yes), but the circuit readings indicate the circuit is unbalanced (block 827=Yes), then the source of the unbalance is likely a change in service utilization within the rack. Rather than immediately generate an alarm (e.g., since the unbalance could be temporary), the method 800 proceeds to block 831 and increments a counter to indicate that the circuit has been unbalanced for Y periods. As illustrated, the method increments a flag which indicates the unbalance was caused by an expected change in server utilization.

From block 831, the method proceeds to block 833 to determine if the circuit has been out of balance for an extended period of time - e.g., at least a predetermined number (X) of periods. The predetermined number of periods may be a user-configurable and/or user-selectable value. The X value, for example, could be user configurable based on how quickly the user wants to be informed of a potential problem. If the circuit has been out of balance for an extended period (e.g., block 833=Yes; Y>X), it is likely the usage of the rack has entered a new unbalanced baseline state and needs adjustment. At block 835, the method 800 responsively outputs an alarm indicating, for example, that it may be necessary to rebalance the circuit and regenerate the model given the new operating environment. If the circuit has not been out of balance for an extended period (e.g., block 833=No; Y<X), the method 800 proceeds to block 837 and exits the analysis workflow 800 without further actions.

Referring back to block 817, when it is determined that the average per-phase current is balanced (i.e., block 817=No), the method 800 proceeds to block 839 and resets the out-of-balance counter (e.g., Y is set to 0). Resetting the out-of-balance counter is an optional precautionary measure to help prevent superfluous alarms being generated the next time blocks 819 through 837 are executed. At block 841, it is determined if the average per-phase current is trending towards an unbalance situation. By way of example, and not limitation, the method 800 checks the 5-minute, 1-hour, 2-hour, 6-hour, and 12-hour average amperage readings for each phase in the circuit. These values are plotted and an analysis is performed to see if the circuit is trending towards an unbalanced condition. In accord with some aspects, the method analyzes the per-circuit amperage values over time to see if the values are starting to deviate - e.g., chart the per-phase amperage values over time to see if a spread in per-phase load is developing. If so (block 841=Yes), the method 800 proceeds to block 819 and the secondary CPU operation analysis is performed. If no obvious trend is present (block 841=No), the method 800 proceeds to block 843 and terminates.

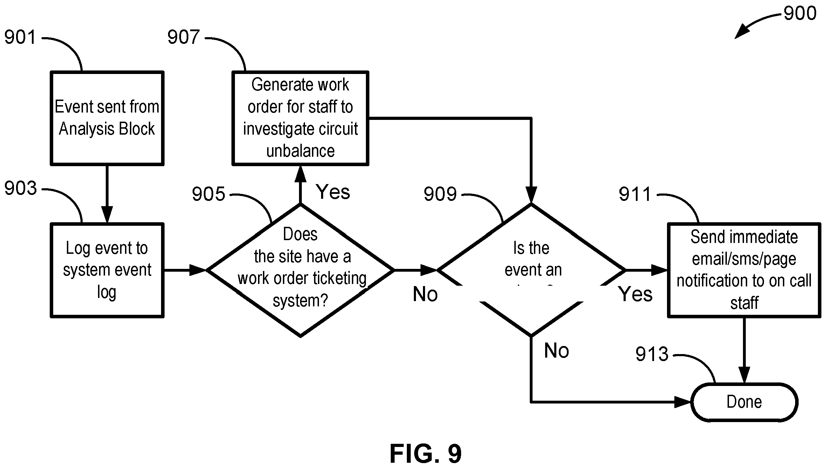

FIG. 9 is a flowchart, designated generally as 900, which illustrates a representative notify workflow in accordance with aspects of the present disclosure. At the start of the notify workflow 900, block 901 receives the alarm notification from block 825 of FIG. 8, and logs the event to an event log at block 903. This step can allow for detailed historical reporting and can allow users to spot additional trends when warnings and alarms are generated. In some implementations, the warnings increase when a certain shift is working or at a particularly busy time of month. Next, the method 900 determines at block 905 if the site (e.g., data center 10) has a work order generation system. If one does exist (block 905=Yes), the method proceeds to block 907 and automatically generates a work order to investigate the problem and assigns it to a work order queue. Depending on the event type (warning or alarm), the work order can be assigned a different priority in the system. After logging the event and, when applicable, generating a work order, block 909 separates alarms from warnings. If block 909 determines that the event is a warning (block 909=No), the processing is complete and the method 900 proceeds to block 913 and terminates. For an unbalance alarm, however, where block 909=Yes, an additional notification can be generated and, e.g., sent to staff through the sites alarming system at block 911. According to some examples, the method 900 will send a page, email, or SMS text message to the appropriate on-call staff to address the issue immediately. The message will include the work order number, if applicable.

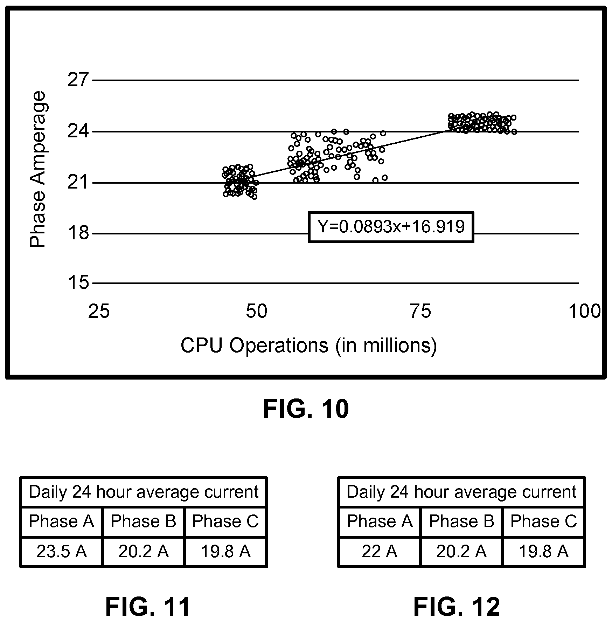

FIGS. 10-12 provide some representative examples. When a new circuit is connect to a rack, CPU operations and amperage is collected to generate the model. FIG. 10 is a graph which illustrates a linear regression model of CPU operations versus phase amperage. Once enough data has been collected and the model created, the system enters normal operations. In the illustrated example, each period equals 5 minutes. In the first example, a Circuit XYZ, Phase A reading of 25Amps is collected, whereas the latest values for the other phases in the circuit are retrieved from a database. A daily average phase for each phase is calculated, as illustrated in FIG. 11: Phase A = 23.5A; Phase B = 20.2A; and, Phase C = 19.8A. In this example, the circuit is out of balance; responsively, the system checks to see if this unbalance is caused by a change in processing behavior of the servers. CPU Operations for Circuit XYZ, Phase A equals approximately 50 million operations, which can be retrieved from the database. The model estimates the circuit amperage should be approximately 21.38Amps. Since the difference between the modeled Phase-A consumption and the actual Phase-A consumption is too high, an alarm is generated and sent to a user indicating an unexpected imbalance has occurred on circuit XYZ.

In the second example, a Circuit XYZ, Phase A reading of 25Amps is collected, while the latest values for the other phases in the circuit is retrieved, for example, from the database. A daily average phase for each phase is calculated, as illustrated in FIG. 12: Phase A = 22A; Phase B = 20.2A; and, Phase C = 19.8A. In this example, the circuit is only slightly out of balance. CPU Operations for Circuit XYZ, Phase A equals approximately 50 million operations, which can be retrieved from the database. The model estimates the circuit amperage should be approximately 21.38Amps. In this instance, the modeled value and the actual values correspond - e.g., the increase in consumption is accounted by an increase in CPU utilization. Responsively, the system can increase a counter indicating a period has occurred that was out of balance, but was caused by an increase in CPU utilization. The system then determines that the circuit of this example has been out of balance for the last 25 periods. Even though the imbalance can be accounted for by increased server demand, it looks like a new baseline usage has been reached on the rack. The system can therefore generate a notification telling a user that the server is out of balance and it is caused by a new level of rack utilization.

None of the existing technologies focus on ensuring balance at the three-phase circuit level of a panel in the manner disclosed herein. Some discuss ways to identify phase imbalance upstream of the panel, but these tools do not always work reliably at the branch circuit level. In general, the prior art uses instantaneous current measurements to identify phase imbalance, and do not take into account "spikes" in phase current due to temporary server activity. The prior art discloses apparatuses that can detect instantaneous phase unbalance situations and automatically switch phases between loads to restore balance in current draw between phases. These apparatuses do not, however, incorporate the phase imbalance detection method that is described in this disclosure. Moreover, an automated switching scheme may be "undesirable" in some data center applications because these schemes can increase the risk that one or more servers may be inadvertently "knocked offline" during switching. Aspects of this disclosure, in contrast, focus on detection and notification so that personnel can evaluate the imbalance and adjust phase balance in a more controlled fashion. Some other existing technologies address phase imbalance by converting three-phase power to DC power that is used by rack equipment, whereas other technologies propose placement of new servers, or deployment of "virtual" servers, to balance power usage; nevertheless, these technologies do not touch on the phase imbalance detection methods described in this disclosure.

Any of the methods described herein can include machine readable instructions for execution by: (a) a processor, (b) a controller, and/or (c) any other suitable processing device. Any algorithm, software, or method disclosed herein can be embodied in software stored on a tangible medium such as, for example, a flash memory, a CD-ROM, a floppy disk, a hard drive, a digital versatile disk (DVD), or other memory devices, but persons of ordinary skill in the art will readily appreciate that the entire algorithm and/or parts thereof could alternatively be executed by a device other than a controller and/or embodied in firmware or dedicated hardware in a well-known manner (e.g., it may be implemented by an application specific integrated circuit (ASIC), a programmable logic device (PLD), a field programmable logic device (FPLD), discrete logic, etc.). Also, some or all of the machine readable instructions represented in any flowchart depicted herein may be implemented manually. Further, although specific algorithms are described with reference to flowcharts depicted herein, persons of ordinary skill in the art will readily appreciate that many other methods of implementing the example machine readable instructions may alternatively be used. For example, the order of execution of the blocks may be changed, and/or some of the blocks described may be changed, eliminated, or combined.

Apects of this disclosure may be implemented, in some embodiments, through a computer-executable program of instructions, such as program modules, generally referred to as software applications or application programs executed by a computer. The software may include, in non-limiting examples, routines, programs, objects, components, and data structures that perform particular tasks or implement particular abstract data types. The software forms an interface to allow a computer to react according to a source of input. The software may also cooperate with other code segments to initiate a variety of tasks in response to data received in conjunction with the source of the received data. The software may be stored on any of a variety of memory media, such as CD-ROM, magnetic disk, bubble memory, and semiconductor memory (e.g., various types of RAM or ROM).

Moreover, the numerous aspects of the present disclosure may be practiced with a variety of computer-system and computer-network configurations, including hand-held devices, multiprocessor systems, microprocessor-based or programmable-consumer electronics, minicomputers, mainframe computers, and the like. In addition, aspects of the present disclosure may be practiced in distributed-computing environments where tasks are performed by remote-processing devices that are linked through a communications network. In a distributed-computing environment, program modules may be located in both local and remote computer-storage media including memory storage devices. Aspects of the present disclosure may therefore, be implemented in connection with various hardware, software or a combination thereof, in a computer system or other processing system.

While exemplary embodiments and applications of the present disclosure have been illustrated and described, it is to be understood that the invention is not limited to the precise construction and compositions disclosed herein and that various modifications, changes, and variations can be apparent from the foregoing descriptions without departing from and scope of the invention as defined in the appended claims.

## Claims

1. A method for detecting a load imbalance in a multi-phase electrical distribution system (10) with a plurality of circuits and a panel (12) having multiple spaces (14A, 14B, 14C), the method comprising:
determining an association between each of the spaces of the panel and a respective one of the circuits;
receiving data of an electrical parameter of the multi-phase electrical distribution system indicative of load imbalance;
receiving data of a system parameter indicative of load activity of a system powered by the multi-phase electrical distribution system, wherein the electrical parameter includes per-phase current or per-phase power, or a combination thereof, and wherein the system parameter includes CPU operations or disk activity, or a combination thereof;
determining an average value from the electrical parameter data;
determining an aggregate value from the system parameter data;
determining a model correlating the system parameter with the electrical parameter based, at least in part, on the associations between the spaces of the panel and the circuits, the electrical parameter data, and the system parameter data;
determining if the average value of the electrical parameter is unbalanced;
if the average value of the electrical parameter is unbalanced, determining a modeled electrical parameter value using the model and the aggregate value of the system parameter;
determining if the average value of the electrical parameter corresponds with the modeled electrical parameter value; and
if the average value of the electrical parameter does not correspond with the modeled electrical parameter, outputting an indication that the load imbalance exists.

2. The method of claim 1, further comprising
determining from the electrical parameter data an electrical parameter value for a single one of the spaces of the panel;
determining if the single space is part of a 3-phase circuit; and
if the single space is part of the 3-phase circuit, determining the other spaces in the 3-phase circuit and determining electrical parameter values from the electrical parameter data for each of the spaces in the 3-phase circuit, wherein the average value of the electrical parameter data includes a respective smoothed representation of the electrical parameter values for each of the spaces in the 3-phase circuit.

3. The method of claim 2, wherein each of the smoothed representations includes a respective rolling daily average value for each of the spaces in the 3-phase circuit, each of the respective rolling daily average values being taken for a different time period.

4. The method of claim 2, wherein the determining if the average value of the electrical parameter is unbalanced includes determining if each of the rolling daily averages for each of the spaces in the 3-phase circuit is unbalanced.

5. The method of claim 1, wherein the average value of the electrical parameter is unbalanced if the average value exceeds a user-selected system threshold.

6. The method of claim 1, wherein the system is connected to a plurality of loads, the method further comprising determining an association between each of the circuits and a respective one of the loads.

7. The method of claim 6, further comprising determining a relative priority of the loads connected to the circuits, wherein the indication that the load imbalance exists includes a high-priority alarm for circuits having a load connected thereto with a high priority.

8. The method of claim 1, further comprising determining a baseline of historical data of the multi-phase electrical distribution system, wherein the determining the model is based, at least in part, on the baseline of historical data.

9. The method of claim 1, wherein the electrical parameter data is indicative of load imbalances at the branch circuit level downstream of the panel.

10. The method of claim 1, wherein each of the circuits is a three-phase circuit, and wherein the determining the model includes creating a separate linear regression model for each of the phases of each of the circuits in the system.

11. The method of claim 1, wherein each of the circuits is a three-phase circuit, and wherein the electrical parameter data and the system parameter data are received for each of the phases of each of the circuits in the system.

12. The method of claim 1, further comprising:
if the average value of the electrical parameter corresponds with the modeled electrical parameter, determining if the average value of the electrical parameter indicates the circuit is out of balance;
if the average value of the electrical parameter indicates the circuit is out of balance, determining if the circuit has been out of balance more than a predetermined number of periods; and
if the circuit has been out of balance more than a predetermined number of periods, outputting the indication that the load imbalance exists.

13. The method of claim 1, further comprising:
if the average value of the electrical parameter is not unbalanced, determining if the average value of the electrical parameter is trending towards unbalance;
if the average value of the electrical parameter is trending towards unbalance, completing the determining the modeled electrical parameter value, and determining if the average value corresponds with the modeled electrical parameter value.

14. A computer-implemented method for detecting branch circuit load imbalance in a multi-phase electrical distribution system of a data center with multiple racks, the electrical distribution system including a plurality of multi-phase circuits electrically connected to an electrical distribution panel having multiple spaces, the method comprising:
generating a map of the system, the map including connections between each of the spaces of the panel and a respective one of the multi-phase circuits, and connections between each of the multi-phase circuits and a respective one of the racks in the data center;
collecting a baseline of historical data of the electrical distribution system;
monitoring for each of the spaces a respective electrical parameter indicative of load imbalances at the branch circuit level downstream of the electrical distribution panel, the electrical parameter including per-phase current or per-phase power, or both of the multi-phase electrical distribution system;
monitoring a respective system parameter indicative of load activity on each of the multi-phase circuits, the system parameter including CPU operations or disk activity, or both, wherein the system parameter is a parameter of a system powered by the multi-phase electrical distribution system;
calculating, for each of the spaces, a respective rolling daily average value of the monitored electrical parameter;
calculating, for each of the multi-phase circuits, a respective rolling daily aggregate value of the monitored system parameter;
creating a linear regression model correlating the system parameter with the electrical parameter over a predetermined period of time, the linear regression model being created, at least in part, from the map of the system, a smoothed representation of the monitored electrical parameter, a smoothed representation of the monitored system parameter, and the baseline of historical data;
determining if the rolling daily average value for each of the spaces is unbalanced;
if at least one of rolling daily average values is unbalanced, calculating a modeled electrical parameter value using the linear regression model and the rolling daily aggregate values of the monitored system parameter;
determining if the at least one of unbalanced rolling daily average values corresponds with the modeled electrical parameter value; and
if the unbalanced one of rolling daily average values does not correspond with the modeled electrical parameter value, generating an alarm indicating that the load imbalance exists.

## Patentansprüche

1. Ein Verfahren zum Detektieren eines Lastungleichgewichts in einem mehrphasigen elektrischen Verteilungssystem (10) mit einer Vielzahl von Kreisen und einer Tafel (12), die mehrere Plätze (14A, 14B, 14C) aufweist, wobei das Verfahren Folgendes beinhaltet:
Bestimmen einer Assoziation zwischen jedem der Plätze der Tafel und einem jeweiligen der Kreise;
Empfangen von Daten eines elektrischen Parameters des mehrphasigen elektrischen Verteilungssystems, der ein Lastungleichgewicht anzeigt;
Empfangen von Daten eines Systemparameters, der eine Lastaktivität eines Systems anzeigt, das durch das mehrphasige elektrische Verteilungssystem mit Energie versorgt wird, wobei der elektrische Parameter Pro-Phase-Strom oder Pro-Phase-Energie oder eine Kombination davon umfasst, und wobei der Systemparameter CPU-Vorgänge oder Festplattenaktivität oder eine Kombination davon umfasst;
Bestimmen eines Durchschnittswerts aus den elektrischen Parameterdaten;
Bestimmen eines Gesamtwerts aus den Systemparameterdaten;
Bestimmen eines Modells, womit der Systemparameter mit dem elektrischen Parameter basierend, mindestens teilweise, auf den Assoziationen zwischen den Plätzen der Tafel und den Kreisen, den elektrischen Parameterdaten und den Systemparameterdaten korreliert wird;
Bestimmen, ob der Durchschnittswert des elektrischen Parameters unausgeglichen ist;
falls der Durchschnittswert des elektrischen Parameters unausgeglichen ist, Bestimmen eines modellierten elektrischen Parameterwerts unter Verwendung des Modells und des Gesamtwerts des Systemparameters;
Bestimmen, ob der Durchschnittswert des elektrischen Parameters dem modellierten elektrischen Parameterwert entspricht; und
falls der Durchschnittswert des elektrischen Parameters dem modellierten elektrischen Parameter nicht entspricht, Ausgeben einer Anzeige, dass das Lastungleichgewicht existiert.

2. Verfahren gemäß Anspruch 1, das ferner Folgendes beinhaltet:
Bestimmen aus den elektrischen Parameterdaten eines elektrischen Parameterwerts für einen einzelnen der Plätze der Tafel;
Bestimmen, ob der einzelne Platz Teil eines 3-Phasen-Kreises ist; und
falls der einzelne Platz Teil des 3-Phasen-Kreises ist, Bestimmen der anderen Plätze im 3-Phasen-Kreis und Bestimmen elektrischer Parameterwerte aus den elektrischen Parameterdaten für jeden der Plätze im 3-Phasen-Kreis, wobei der Durchschnittswert der elektrischen Parameterdaten eine jeweilige geglättete Repräsentation der elektrischen Parameterwerte für jeden der Plätze im 3-Phasen-Kreis umfasst.

3. Verfahren gemäß Anspruch 2, wobei jede der geglätteten Repräsentationen einen jeweiligen gleitenden täglichen Durchschnittswert für jeden der Plätze im 3-Phasen-Kreis umfasst, wobei jeder der jeweiligen gleitenden täglichen Durchschnittswerte für eine unterschiedliche Zeitperiode genommen wird.

4. Verfahren gemäß Anspruch 2, wobei das Bestimmen, ob der Durchschnittswert des elektrischen Parameters unausgeglichen ist, das Bestimmen, ob jeder der gleitenden täglichen Durchschnitte für jeden der Plätze im 3-Phasen-Kreis unausgeglichen ist, umfasst.

5. Verfahren gemäß Anspruch 1, wobei der Durchschnittswert des elektrischen Parameters unausgeglichen ist, falls der Durchschnittswert einen benutzerselektierten Systemschwellenwert überschreitet.

6. Verfahren gemäß Anspruch 1, wobei das System mit einer Vielzahl von Lasten verbunden ist, wobei das Verfahren ferner das Bestimmen einer Assoziation zwischen jedem der Kreise und einer jeweiligen der Lasten beinhaltet.

7. Verfahren gemäß Anspruch 6, das ferner das Bestimmen einer relativen Priorität der mit den Kreisen verbundenen Lasten beinhaltet, wobei die Anzeige, dass das Lastungleichgewicht existiert, einen Hochprioritätsalarm für Kreise umfasst, die eine damit verbundene Last mit einer hohen Priorität aufweisen.

8. Verfahren gemäß Anspruch 1, das ferner das Bestimmen einer Basislinie von historischen Daten des mehrphasigen elektrischen Verteilungssystems beinhaltet, wobei das Bestimmen des Modells, mindestens teilweise, auf der Basislinie von historischen Daten basiert.

9. Verfahren gemäß Anspruch 1, wobei die elektrischen Parameterdaten Lastungleichgewichte auf der Zweigkreisebene nach der Tafel anzeigen.

10. Verfahren gemäß Anspruch 1, wobei jeder der Kreise ein Dreiphasenkreis ist und wobei das Bestimmen des Modells das Erstellen eines separaten linearen Regressionsmodells für jede der Phasen von jedem der Kreise im System umfasst.

11. Verfahren gemäß Anspruch 1, wobei jeder der Kreise ein Dreiphasenkreis ist und wobei die elektrischen Parameterdaten und die Systemparameterdaten für jede der Phasen von jedem der Kreise im System empfangen werden.

12. Verfahren gemäß Anspruch 1, das ferner Folgendes beinhaltet:
falls der Durchschnittswert des elektrischen Parameters dem modellierten elektrischen Parameter entspricht, Bestimmen, ob der Durchschnittswert des elektrischen Parameters anzeigt, dass der Kreis nicht im Gleichgewicht ist;
falls der Durchschnittswert des elektrischen Parameters anzeigt, dass der Kreis nicht im Gleichgewicht ist, Bestimmen, ob der Kreis mehr als eine vorbestimmte Anzahl von Perioden nicht im Gleichgewicht war; und
falls der Kreis mehr als eine vorbestimmte Anzahl von Perioden nicht im Gleichgewicht war, Ausgeben der Anzeige, dass das Lastungleichgewicht existiert.

13. Verfahren gemäß Anspruch 1, das ferner Folgendes beinhaltet:
falls der Durchschnittswert des elektrischen Parameters nicht unausgeglichen ist, Bestimmen, ob der Durchschnittswert des elektrischen Parameters auf Unausgeglichenheit zusteuert;
falls der Durchschnittswert des elektrischen Parameters auf Unausgeglichenheit zusteuert, Abschließen des Bestimmens des modellierten elektrischen Parameterwerts und Bestimmen, ob der Durchschnittswert dem modellierten elektrischen Parameterwert entspricht.

14. Ein computerimplementiertes Verfahren zum Detektieren eines Zweigkreislastungleichgewichts in einem mehrphasigen elektrischen Verteilungssystem eines Datenzentrums mit mehreren Gestellen, wobei das elektrische Verteilungssystem eine Vielzahl von mehrphasigen Kreisen umfasst, die mit einer elektrischen Verteilungstafel verbunden sind, die mehrere Plätze aufweist, wobei das Verfahren Folgendes beinhaltet:
Generieren einer Karte des Systems, wobei die Karte Verbindungen zwischen jedem der Plätze der Tafel und einem jeweiligen der mehrphasigen Kreise sowie Verbindungen zwischen jedem der mehrphasigen Kreise und einem jeweiligen der Gestelle im Datenzentrum umfasst;
Erfassen einer Basislinie von historischen Daten des elektrischen Verteilungssystems;
Überwachen für jeden der Plätze eines jeweiligen elektrischen Parameters, der Lastungleichgewichte auf der Zweigkreisebene nach der elektrischen Verteilungstafel anzeigt, wobei der elektrische Parameter Pro-Phase-Strom oder Pro-Phase-Energie oder beides des mehrphasigen elektrischen Verteilungssystems umfasst;
Überwachen eines jeweiligen Systemparameters, der eine Lastaktivität an jedem der mehrphasigen Kreise anzeigt, wobei der Systemparameter CPU-Vorgänge oder Festplattenaktivität, oder beides, umfasst, wobei der Systemparameter ein Parameter eines Systems ist, das durch das mehrphasige elektrische Verteilungssystem mit Energie versorgt wird;
Berechnen, für jeden der Plätze, eines jeweiligen gleitenden täglichen Durchschnittswerts des überwachten elektrischen Parameters;
Berechnen, für jeden der mehrphasigen Kreise, eines jeweiligen gleitenden täglichen Gesamtwerts des überwachten Systemparameters;
Erstellen eines linearen Regressionsmodells, womit der Systemparameter mit dem elektrischen Parameter über eine vorbestimmte Zeitperiode korreliert wird, wobei das lineare Regressionsmodell, mindestens teilweise, aus der Karte des Systems, einer geglätteten Repräsentation des überwachten elektrischen Parameters, einer geglätteten Repräsentation des überwachten Systemparameters und der Basislinie von historischen Daten erstellt wird;
Bestimmen, ob der gleitende tägliche Durchschnittswert für jeden der Plätze unausgeglichen ist;
falls mindestens einer der gleitenden täglichen Durchschnittswerte unausgeglichen ist, Berechnen eines modellierten elektrischen Parameterwerts unter Verwendung des linearen Regressionsmodells und der gleitenden täglichen Gesamtwerte des überwachten Systemparameters;
Bestimmen, ob der mindestens eine der unausgeglichenen gleitenden täglichen Durchschnittswerte dem modellierten elektrischen Parameterwert entspricht; und
falls der unausgeglichene der gleitenden täglichen Durchschnittswerte dem modellierten elektrischen Parameterwert nicht entspricht, generieren eines Alarms, der anzeigt, dass das Lastungleichgewicht existiert.

## Revendications

1. Une méthode pour détecter un déséquilibre de charge dans un système de distribution électrique à phases multiples (10) avec une pluralité de circuits et un panneau (12) possédant des espaces multiples (14A, 14B, 14C), la méthode comprenant :
le fait de déterminer une association entre chacun des espaces du panneau et un circuit respectif parmi les circuits ;
le fait de recevoir des données d'un paramètre électrique du système de distribution électrique à phases multiples indicatives d'un déséquilibre de charge ;
le fait de recevoir des données d'un paramètre de système indicatives d'une activité de charge d'un système alimenté par le système de distribution électrique à phases multiples, dans laquelle le paramètre électrique inclut un courant par phase ou une puissance par phase, ou une combinaison de ceux-ci, et dans laquelle le paramètre de système inclut des opérations de CPU ou une activité de disque, ou une combinaison de celles-ci ;
le fait de déterminer une valeur moyenne à partir des données du paramètre électrique ;
le fait de déterminer une valeur globale à partir des données du paramètre de système ;
le fait de déterminer un modèle assurant la corrélation du paramètre de système avec le paramètre électrique sur la base, au moins en partie, des associations entre les espaces du panneau et les circuits, des données du paramètre électrique, et des données du paramètre de système ;
le fait de déterminer si la valeur moyenne du paramètre électrique est déséquilibrée ;
si la valeur moyenne du paramètre électrique est déséquilibrée, le fait de déterminer une valeur du paramètre électrique modélisé en utilisant le modèle et la valeur globale du paramètre de système ;
le fait de déterminer si la valeur moyenne du paramètre électrique correspond à la valeur du paramètre électrique modélisé ; et
si la valeur moyenne du paramètre électrique ne correspond pas au paramètre électrique modélisé, le fait d'émettre une indication que le déséquilibre de charge existe.

2. La méthode de la revendication 1, comprenant en outre
le fait de déterminer à partir des données du paramètre électrique une valeur du paramètre électrique pour un espace individuel parmi les espaces du panneau ;
le fait de déterminer si l'espace individuel fait partie d'un circuit à 3 phases ; et
si l'espace individuel fait partie du circuit à 3 phases, le fait de déterminer les autres espaces dans le circuit à 3 phases et le fait de déterminer des valeurs du paramètre électrique à partir des données du paramètre électrique pour chacun des espaces dans le circuit à 3 phases, dans laquelle la valeur moyenne des données du paramètre électrique inclut une représentation lissée respective des valeurs du paramètre électrique pour chacun des espaces dans le circuit à 3 phases.

3. La méthode de la revendication 2, dans laquelle chacune des représentations lissées inclut une valeur moyenne quotidienne mobile respective pour chacun des espaces dans le circuit à 3 phases, chacune des valeurs moyennes quotidiennes mobiles respectives étant prise pour une période de temps différente.

4. La méthode de la revendication 2, dans laquelle le fait de déterminer si la valeur moyenne du paramètre électrique est déséquilibrée inclut le fait de déterminer si chacune des moyennes quotidiennes mobiles pour chacun des espaces dans le circuit à 3 phases est déséquilibrée.

5. La méthode de la revendication 1, dans laquelle la valeur moyenne du paramètre électrique est déséquilibrée si la valeur moyenne dépasse un seuil de système sélectionné par un utilisateur.

6. La méthode de la revendication 1, dans laquelle le système est connecté à une pluralité de charges, la méthode comprenant en outre la détermination d'une association entre chacun des circuits et une charge respective parmi les charges.

7. La méthode de la revendication 6, comprenant en outre la détermination d'une priorité relative des charges connectées aux circuits, dans laquelle l'indication que le déséquilibre de charge existe inclut une alarme de haute priorité pour des circuits ayant une charge qui leur est connectée avec une haute priorité.

8. La méthode de la revendication 1, comprenant en outre la détermination d'une ligne de base de données historiques du système de distribution électrique à phases multiples, dans laquelle la détermination du modèle est basée, au moins en partie, sur la ligne de base de données historiques.

9. La méthode de la revendication 1, dans laquelle les données du paramètre électrique sont indicatives de déséquilibres de charge au niveau du circuit de dérivation en aval du panneau.

10. La méthode de la revendication 1, dans laquelle chacun des circuits est un circuit triphasé, et dans laquelle la détermination du modèle inclut la création d'un modèle à régression linéaire distinct pour chacune des phases de chacun des circuits dans le système.

11. La méthode de la revendication 1, dans laquelle chacun des circuits est un circuit triphasé, et dans laquelle les données du paramètre électrique et les données du paramètre de système sont reçues pour chacune des phases de chacun des circuits dans le système.

12. La méthode de la revendication 1, comprenant en outre :
si la valeur moyenne du paramètre électrique correspond au paramètre électrique modélisé, le fait de déterminer si la valeur moyenne du paramètre électrique indique que le circuit est hors équilibre ;
si la valeur moyenne du paramètre électrique indique que le circuit est hors équilibre, le fait de déterminer si le circuit a été hors équilibre pendant plus d'un nombre prédéterminé de périodes ; et
si le circuit a été hors équilibre pendant plus d'un nombre prédéterminé de périodes, le fait d'émettre l'indication que le déséquilibre de charge existe.

13. La méthode de la revendication 1, comprenant en outre :
si la valeur moyenne du paramètre électrique n'est pas déséquilibrée, le fait de déterminer si la valeur moyenne du paramètre électrique tend vers un déséquilibre ;
si la valeur moyenne du paramètre électrique tend vers un déséquilibre, le fait d'achever la détermination de la valeur du paramètre électrique modélisé, et le fait de déterminer si la valeur moyenne correspond à la valeur du paramètre électrique modélisé.

14. Une méthode mise en oeuvre par un ordinateur pour détecter un déséquilibre de charge de circuit de dérivation dans un système de distribution électrique à phases multiples d'un centre de données avec des bâtis multiples, le système de distribution électrique incluant une pluralité de circuits à phases multiples connectées électriquement à un panneau de distribution électrique ayant des espaces multiples, la méthode comprenant :
le fait de générer une topographie du système, la topographie incluant des connexions entre chacun des espaces du panneau et un circuit respectif parmi les circuits à phases multiples, et des connexions entre chacun des circuits à phases multiples et un bâti respectif parmi les bâtis dans le centre de données ;
le fait de recueillir une ligne de base de données historiques du système de distribution électrique ;
le fait de surveiller pour chacun des espaces un paramètre électrique respectif indicatif de déséquilibres de charge au niveau du circuit de dérivation en aval du panneau de distribution électrique, le paramètre électrique incluant un courant par phase ou une puissance par phase, ou les deux, du système de distribution électrique à phases multiples ;
le fait de surveiller un paramètre de système respectif indicatif d'une activité de charge sur chacun des circuits à phases multiples, le paramètre de système incluant des opérations de CPU ou une activité de disque, ou les deux, dans laquelle le paramètre de système est un paramètre d'un système alimenté par le système de distribution électrique à phases multiples ;
le fait de calculer, pour chacun des espaces, une valeur moyenne quotidienne mobile respective du paramètre électrique surveillé ;
le fait de calculer, pour chacun des circuits à phases multiples, une valeur globale quotidienne mobile respective du paramètre de système surveillé ;
le fait de créer un modèle à régression linéaire assurant la corrélation du paramètre de système avec le paramètre électrique sur une période de temps prédéterminée, le modèle à régression linéaire étant créé, au moins en partie, à partir de la cartographie du système, d'une représentation lissée du paramètre électrique surveillé, d'une représentation lissée du paramètre de système surveillé, et de la ligne de base de données historiques ;
le fait de déterminer si la valeur moyenne quotidienne mobile pour chacun des espaces est déséquilibrée ;
si au moins une des valeurs moyennes quotidiennes mobiles est déséquilibrée, le fait de calculer une valeur du paramètre électrique modélisé en utilisant le modèle à régression linéaire et les valeurs globales quotidiennes mobiles du paramètre de système surveillé ;
le fait de déterminer si cette au moins une des valeurs moyennes quotidiennes mobiles déséquilibrées correspond à la valeur du paramètre électrique modélisé ; et
si la valeur déséquilibrée parmi les valeurs moyennes quotidiennes mobiles ne correspond pas à la valeur du paramètre électrique modélisé, le fait de générer une alarme indiquant que le déséquilibre de charge existe.
